(19) Europäisches Patentamt / European Patent Office / Office européen des brevets

(11) **EP 4 723 185 A1**

(12) **EUROPEAN PATENT APPLICATION**
published in accordance with Art. 153(4) EPC

(43) Date of publication:
08.04.2026 Bulletin 2026/15

(21) Application number: 24811084.3

(22) Date of filing: 20.05.2024

(51) International Patent Classification (IPC):
*H01M 4/13* (2010.01)    *H01M 4/38* (2006.01)
*H01M 4/48* (2010.01)    *H01M 4/139* (2010.01)
*H01M 4/587* (2010.01)

(52) Cooperative Patent Classification (CPC):
Y02E 60/10

(86) International application number:
**PCT/JP2024/018556**

(87) International publication number:
**WO 2024/242077 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 24.05.2023 JP 2023085648

(71) Applicant: **Panasonic Intellectual Property Management Co., Ltd.**
**Kadoma-shi, Osaka 571-0057 (JP)**

(72) Inventors:
• **HASEGAWA Masaki**
**Kadoma-shi, Osaka 571-0057 (JP)**
• **SAKATA Motohiro**
**Kadoma-shi, Osaka 571-0057 (JP)**

(74) Representative: **Novagraaf International SA**
**Chemin de l'Echo 3**
**1213 Onex, Geneva (CH)**

(54) **NEGATIVE ELECTRODE FOR SECONDARY BATTERIES, SECONDARY BATTERY, AND METHOD FOR PRODUCING NEGATIVE ELECTRODE FOR SECONDARY BATTERIES**

(57)    Provided is a negative electrode for secondary batteries that has satisfactory electrolyte solution permeability. The negative electrode for secondary batteries comprises a negative electrode current collector and a negative electrode mixture layer disposed on the negative electrode current collector.

The negative electrode for secondary batteries comprises a negative electrode current collector and a negative electrode mixture layer disposed on the negative electrode current collector. The negative electrode for secondary batteries is characterized in that the negative electrode mixture layer includes a carbon material and a Si-based material, a pore size distribution of the negative electrode mixture layer as measured by mercury intrusion porosimetry has a peak R1 with a maximum value $V_{R1}$ in a pore size range of 1-3 $\mu$m and a peak R2 with a maximum value $V_{R2}$ in a pore size range of 30-100 $\mu$m, and the ratio ($V_{R2}/V_{R1}$) of the maximum value $V_{R2}$ of the peak R2 to the maximum value $V_{R1}$ of the peak R1 is 0.5-100.

EP 4 723 185 A1

**Description**

TECHNICAL FIELD

The present disclosure relates to a negative electrode for secondary batteries, a secondary battery, and a method for producing a negative electrode for secondary batteries.

BACKGROUND

Si-based materials are currently attracting attention as materials capable of increasing battery capacity. Si-based materials are capable of electrochemically occluding and releasing lithium ions, and enable charging and discharging with very large capacity, compared to carbon materials such as graphite.

For example, Patent Literature 1 discloses a negative electrode active material for lithium ion secondary batteries that contains a Si-based material represented by $SiO_x$ $(0 < x < 2)$ and a carbon material, in which the negative electrode active material for lithium ion secondary batteries has internal voids.

In addition, for example, Patent Literature 2 discloses a negative electrode using sintered composite particles containing silicon as a constituent element and having a specific pore volume by sintering graphite particles and carbonaceous particles in alloy particles capable of occluding and releasing lithium.

CITATION LIST

PATENT LITERATURE

Patent Literature 1: JP 2013-219059 A
Patent Literature 2: JP 2001-210323 A

SUMMARY

By the way, a Si-based material can increase the capacity of a secondary battery, but significantly expands and contracts in volume due to charging and discharging. Thus, in a negative electrode mixture layer containing the Si-based material, the amount of an electrolyte solution moving into and out of the negative electrode mixture layer increases due to expansion and contraction of the Si-based material. Therefore, when the permeability of the electrolyte solution into the negative electrode mixture layer is low, the amount of the electrolyte solution in the negative electrode mixture layer decreases during charging and discharging of the battery, which may cause deterioration of battery characteristics such as charge-discharge cycle characteristics.

Therefore, an object of the present disclosure is to provide a negative electrode for secondary batteries having good electrolyte solution permeability, a secondary battery including the negative electrode for secondary batteries, and a method for producing the negative electrode for secondary batteries.

A negative electrode for secondary batteries according to an aspect of the present disclosure includes a negative electrode current collector and a negative electrode mixture layer disposed on the negative electrode current collector, wherein the negative electrode mixture layer includes a carbon material and a Si-based material, a pore size distribution of the negative electrode mixture layer as measured by mercury porosimetry has a peak R1 having a maximum value $V_{R1}$ in a range in which a pore size is greater than or equal to 1 $\mu$m and less than or equal to 3 $\mu$m and a peak R2 having a maximum value $V_{R2}$ in a range in which the pore size is greater than or equal to 30 $\mu$m and less than or equal to 100 $\mu$m, and a ratio $(V_{R2}/V_{R1})$ of the maximum value $V_{R2}$ of the peak R2 to the maximum value $V_{R1}$ of the peak R1 is greater than or equal to 0.5 and less than or equal to 100.

A secondary battery according to an aspect of the present disclosure includes the negative electrode for secondary batteries.

A method for producing a negative electrode for secondary batteries according to an aspect of the present disclosure includes: a first step of applying a negative electrode slurry containing a graphite material having a specific surface area less than or equal to 3 $m^2/g$, a Si-based material, and vaporization particles, vaporized at a temperature greater than or equal to 100°C and less than or equal to 200°C, to a negative electrode current collector to produce a coating film, and then rolling the coating film; and a second step of heat-treating the coating film at a temperature greater than or equal to 100°C and less than or equal to 200°C after the first step to form a negative electrode mixture layer.

According to the present disclosure, it is possible to provide the negative electrode for secondary batteries having good electrolyte solution permeability, the secondary battery including the negative electrode for secondary batteries, and the method for producing the negative electrode for secondary batteries.

BRIEF DESCRIPTION OF DRAWINGS

FIG. 1 is a cross-sectional view of a secondary battery according to an example of an embodiment.
FIG. 2 is a cross-sectional view of a negative electrode according to an example of an embodiment.

DESCRIPTION OF EMBODIMENTS

Hereinafter, examples of embodiments will be described with reference to the drawings. Note that a secondary battery of the present disclosure is not limited to the embodiments described below. In addition, the drawings referred to in the description of the embodiments are schematically illustrated.

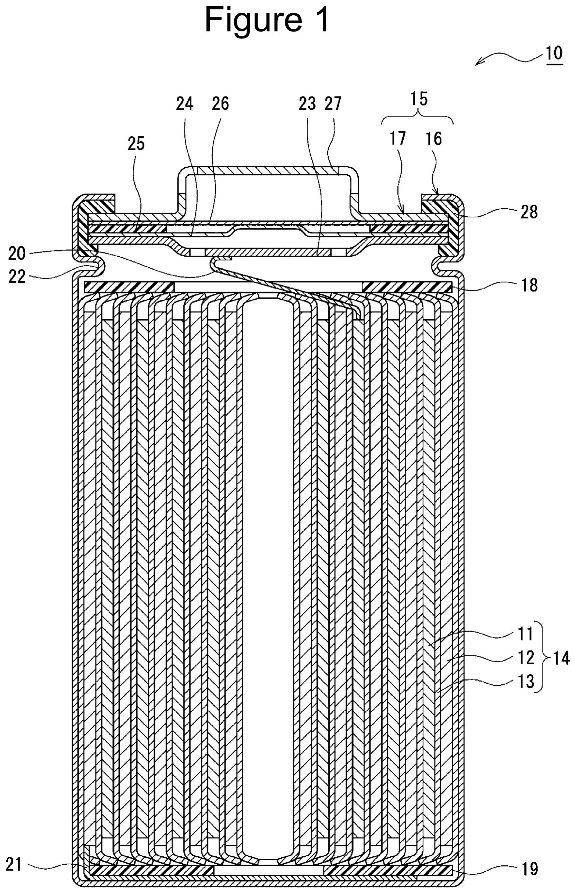

FIG. 1 is a cross-sectional view of a secondary battery according to an example of an embodiment. A secondary battery 10 illustrated in FIG. 1 includes a wound electrode assembly 14 in which a positive electrode 11 and a negative electrode 12 are wound with a separator 13 interposed therebetween, an electrolyte solution, insulating plates 18 and 19 disposed on the upper and lower sides of the electrode assembly 14 respectively, and a battery case 15 housing the above-described members. The battery case 15 includes a bottomed cylindrical case body 16 and a sealing assembly 17 that seals an opening of the case body 16. Note that, instead of the wound electrode assembly 14, an electrode assembly having another form, such as a stacked electrode assembly in which positive electrodes and negative electrodes are alternately stacked with separators interposed therebetween, may be applied. In addition, examples of the battery case 15 include metal cases having a cylindrical shape, a square shape, a coin shape, a button shape, or the like, and resin cases (so-called laminated type) formed by lamination with a resin sheet.

The electrolyte solution may be an aqueous electrolyte solution, but is preferably a non-aqueous electrolyte solution containing a non-aqueous solvent and an electrolyte salt dissolved in the non-aqueous solvent. Examples of the non-aqueous solvent include esters, ethers, nitriles, amides, and mixed solvents of two or more thereof. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product in which at least a part of hydrogen in these solvents is substituted with a halogen atom such as fluorine (for example, fluoroethylene carbonate or the like). As the electrolyte salt, for example, a lithium salt such as $LiPF_6$ is used.

The case body 16 is, for example, a bottomed cylindrical metal container. A gasket 28 is provided between the case body 16 and the sealing assembly 17 to keep the interior of the battery airtight. The case body 16 has a projecting portion 22 in which, for example, a part of the side surface thereof projects inward to support the sealing assembly 17. The projecting portion 22 is preferably formed in an annular shape along the circumferential direction of the case body 16, and supports the sealing assembly 17 on its top surface.

The sealing assembly 17 has a laminate structure formed by stacking a filter 23, a lower valve member 24, an insulating member 25, an upper valve member 26, and a cap 27 sequentially from the side of the electrode assembly 14. Individual members constituting the sealing assembly 17 have, for example, a disk shape or a ring shape. The members except the insulating member 25 are mutually electrically connected. The lower valve member 24 and the upper valve member 26 are mutually connected at the center and the insulating member 25 is interposed between the circumferential portions of them. When the internal pressure of the secondary battery 10 increases due to heat generated by an internal short circuit or the like, for example, the lower valve member 24 deforms so as to push the upper valve member 26 up toward the cap 27 side and breaks, so that a current path between the lower valve member 24 and the upper valve member 26 is cut off. When the internal pressure further increases, the upper valve member 26 is broken, and gas is released through the opening of the cap 27.

In the secondary battery 10 illustrated in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to a lower surface of the filter 23, which is a bottom plate of the sealing assembly 17, by welding or the like, and the cap 27, which is a top plate of the sealing assembly 17 electrically connected to the filter 23, serves as a positive electrode terminal. The negative electrode lead 21 is connected to the bottom inner surface of the case body 16 by welding or the like, and the case body 16 serves as a negative electrode terminal.

Hereinafter, the positive electrode 11, the negative electrode 12, and the separator 13 will be described in detail.

[Positive Electrode]

The positive electrode 11 has a positive electrode current collector and a positive electrode mixture layer disposed on the positive electrode current collector. The positive electrode mixture layer may be provided on one surface of the positive electrode current collector, or may be provided on both surfaces of the positive electrode current collector. As the positive electrode current collector, for example, a foil of a metal such as aluminum that is stable in a potential range of the positive electrode 11, or a film having the metal disposed on its surface layer can be used. The positive electrode mixture layer contains, for example, a positive electrode active material, a binder, a conductive agent, and the like. The positive electrode 11 can be produced by, for example, applying a positive electrode slurry including a positive electrode active material, a binder, a conductive agent, and the like to a surface of a positive electrode current collector, drying the coating film, and then rolling the coating film to form a positive electrode mixture layer on both surfaces of the positive electrode current collector.

Examples of the conductive agent contained in the positive electrode mixture layer include carbon materials such as carbon black, acetylene black, Ketjenblack, graphite, and carbon nanotubes. Examples of the binder contained in the positive electrode mixture layer include fluororesins such as polytetrafluoroethylene (PTFE) and polyvinylidene fluoride (PVdF), polyacrylonitrile (PAN), polyimide, acrylic resins, polyolefins, styrenebutadiene rubber (SBR), carboxymethyl cellulose (CMC), a cellulose derivative such as a salt of CMC, and polyethylene oxide (PEO).

Examples of the positive electrode active material include a lithium transition metal composite oxide. Examples of a metal element contained in the lithium transition metal composite oxide include Ni, Co, Mn, Al, B, Mg, Ti, V, Cr, Fe, Cu, Zn, Ga, Sr, Zr, Nb, In, Sn, Ta, and W. Among them, it is preferable to contain at least one of Ni, Co, and Mn. An example of a suitable lithium transition metal composite oxide is a composite oxide represented by a general formula: $LiMO_2$ (wherein M is Ni and X, X is a metal element except Ni, and the ratio of Ni is greater than or equal to 50 mol% and less than or equal to 95 mol% based on the total number of the moles of the metal element except Li). Examples of X in the above formula include Co, Mn, Al, B, Mg, Ti, V, Cr, Fe, Cu, Zn, Ga, Sr, Zr, Nb, In, Sn, Ta, and W.

[Negative Electrode]

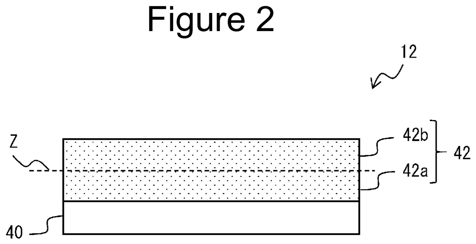

FIG. 2 is a cross-sectional view of a negative electrode according to an example of an embodiment. The negative electrode 12 includes a negative electrode current collector 40 and a negative electrode mixture layer 42 provided on the negative electrode current collector 40. Note that FIG. 2 exemplifies a form in which the negative electrode mixture layer 42 is provided on one surface of the negative electrode current collector 40, but the negative electrode mixture layer 42 may be provided on both surfaces of the negative electrode current collector 40. As the negative electrode current collector 40, for example, a foil of a metal such as copper that is stable in a potential range of the negative electrode 12, or a film having the metal disposed on its surface layer can be used. The negative electrode mixture layer 42 includes a negative electrode active material, and may include a binder, a conductive agent, and the like. The negative electrode active material contains a carbon material and a Si-based material. The negative electrode active material may contain a material capable of reversibly occluding and releasing lithium ions in addition to the carbon material and the Si-based material. Examples of the binder and the conductive agent include those similar to those for the positive electrode 11.

A pore size distribution of the negative electrode mixture layer 42 as measured by mercury porosimetry has a peak R1 having a maximum value $V_{R1}$ in a range in which a pore size is greater than or equal to 1 $\mu$m and less than or equal to 3 $\mu$m and a peak R2 having a maximum value $V_{R2}$ in a range in which the pore size is greater than or equal to 30 $\mu$m and less than or equal to 100 $\mu$m, and a ratio ($V_{R2}/V_{R1}$) of the maximum value $V_{R2}$ of the peak R2 to the maximum value $V_{R1}$ of the peak R1 is greater than or equal to 0.5 and less than or equal to 100, preferably greater than or equal to 0.5 and less than or equal to 100, and more preferably less than or equal to 0.5 or less and less than or equal to 1.0. As described above, when the ratio ($V_{R2}/V_{R1}$) of the maximum value $V_{R2}$ of the peak R2 to the maximum value $V_{R1}$ of the peak R1 in the pore size distribution satisfies the above range, the permeability of the electrolyte solution into the negative electrode mixture layer 42 is improved. That is, the negative electrode 12 has good electrolyte solution permeability. The reason why the permeability of the electrolyte solution into the negative electrode mixture layer 42 is improved is not clear, but it is presumed that pores having a relatively large diameter into which the electrolyte solution easily permeates, exist in a wide range in the negative electrode mixture layer 42 in which $V_{R2}/V_{R1}$ satisfies the above range, and as a result, it is considered that the permeability of the electrolyte solution is improved.

The pore size distribution of the negative electrode mixture layer 42 as measured by the mercury porosimetry further has a peak R3 having a maximum value $V_{R3}$ in a range in which the pore size is greater than or equal to 0.1 $\mu$m and less than or equal to 0.6 $\mu$m, and a ratio ($V_{R3}/V_{R1}$) of the maximum value $V_{R3}$ of the peak R3 to the maximum value $V_{R1}$ of the peak R1 is preferably greater than or equal to 0.9 and less than or equal to 1.5. When the ratio ($V_{R3}/V_{R1}$) of the maximum value $V_{R3}$ of the peak R3 to the maximum value $V_{R1}$ of the peak R1 satisfies the above range, for example, the permeability of the electrolyte solution into the negative electrode mixture layer 42 is further improved.

In mercury porosimetry, mercury is pressurized to infiltrate mercury into pores of a solid sample, and the diameter and volume of the pores are calculated from the pressure applied to the mercury and the amount of mercury injected into the pores. When the mercury to which pressure P is applied can enter pores having a diameter D, the diameter D of the pores is determined from the pressure P, the contact angle $\theta$ of the mercury, and the surface tension $\sigma$ of the mercury

according to the following equation. In addition, the volume of the pores is calculated from the amount of the mercury injected into the pores. Note that a pore size in the present disclosure is a diameter of pores.

$$-4\sigma\cos\theta = PD$$

The pore size distribution measured by mercury porosimetry is a graph (pore distribution curve) of log differential pore volume ($cm^3/g$) plotted against an average pore size ($\mu m$) in a section of each measurement point, where the horizontal axis indicates the pore size ($\mu m$) and the vertical axis indicates the log differential pore volume ($cm^3/g$). In the present disclosure, a maximum value of a peak in the pore size distribution means a value of log differential pore volume at the peak.

The measurement of the pore size distribution by mercury porosimetry is performed on the negative electrode mixture layer before initial charging. For example, by using a measurement sample obtained by punching a negative electrode into a predetermined shape before the initial charging, the pore size distribution of a negative electrode mixture layer contained in the measurement sample can be measured by mercury porosimetry. Note that the measurement sample only needs to have at least the negative electrode mixture layer on its surface, and may have another configuration such as a negative electrode current collector.

The measurement of the pore size distribution by mercury porosimetry can be performed using, for example, an apparatus such as Autopore IV 9500 series manufactured by Micromeritics Instrument Corporation. In the measurement, the measurement sample is sealed in a sample container under an inert atmosphere, mercury is injected into the sample container, and pressure is applied to the mercury. Here, the pressure applied to the mercury is appropriately adjusted according to a pore size that the measurement sample can have, and is not particularly limited, but for example, measurement that is performed while the pressure is changed from 0.5 psi (3.4 kPa) to 60000 psi (413,400 kPa) is preferred in order to measure a wide range of pore sizes.

In the present embodiment, from the viewpoint of further improving the permeability of the electrolyte solution into the negative electrode mixture layer 42, when the negative electrode mixture layer 42 illustrated in FIG. 2 is divided into two equal parts in the thickness direction to be divided into a lower half region 42a on the negative electrode current collector 40 side and an upper half region 42b on the surface side, an abundance ratio of pores corresponding to the peak R2 in the upper half region 42b is preferably greater than an abundance ratio of pores corresponding to the peak R2 in the lower half region 42a. As a result, more pores having a relatively large diameter into which the electrolyte solution easily permeates are present in the upper half region 42b on the surface side of the negative electrode mixture layer 42, so that the electrolyte solution easily permeates from the surface of the negative electrode mixture layer 42. As a result, it is considered that the permeation of the electrolyte solution into the lower half region 42a is difficult to hinder, and the permeability of the electrolyte solution into the entire negative electrode mixture layer 42 is improved. The phrase "the negative electrode mixture layer 42 is divided into two equal parts in the thickness direction" means that when a lamination direction of the negative electrode current collector 40 and the negative electrode mixture layer 42 is defined as the thickness direction of the negative electrode mixture layer 42, the negative electrode mixture layer 42 is divided in half at the middle Z of a thickness of the negative electrode mixture layer 42. Then, when the negative electrode mixture layer 42 is divided into two equal parts in the thickness direction, the negative electrode mixture layer 42 located near the negative electrode current collector 40 is defined as the lower half region 42a, and the negative electrode mixture layer 42 located far from the negative electrode current collector 40 is defined as the upper half region 42b. The abundance ratio of pores corresponding to the peak R2 is measured as follows.

In performing the measurement of the pore size distribution by the mercury porosimetry, both an electrode sample obtained by scraping off the upper half of the negative electrode mixture layer 42 to obtain only the lower half and an electrode sample not subjected to scraping processing are measured to be compared in terms of the ratio of the area of the peak R2 to the total area of all pore peaks in the pore distribution curve, whereby the magnitude of the abundance ratio of the peak R2 between the upper half and the lower half of the negative electrode mixture layer can be easily determined.

Examples of the Si-based material contained in the negative electrode active material include Si, a Si alloy, and a Si compound. In addition, the Si-based material may be, for example, composite particles having an ion-conductive phase and a silicon phase (silicon particles from one viewpoint) dispersed in the ion-conductive phase. The ion-conductive phase is a phase that conducts ions, and examples thereof include a silicate phase, a carbon phase, and a silicon oxide phase.

The carbon phase may include, for example, amorphous carbon (amorphous carbon). Examples of the amorphous carbon constituting the carbon layer include hard carbon, soft carbon, and other amorphous carbon. The amorphous carbon is a carbon material in which an average spacing $d_{002}$ of (002) face measured by an X-ray diffraction method exceeds 0.34 nm.

A main component (for example, greater than or equal to 95% by mass and less than or equal to 100% by mass) of the silicon oxide phase may be silicon dioxide. The composition of the composite particle including the silicon oxide phase and the silicon phase dispersed therein can be represented by $SiO_x$ as a whole. $SiO_x$ has a structure in which silicon fine particles are dispersed in amorphous $SiO_2$. A content ratio x of oxygen to silicon is, for example, preferably $0.5 \leq x < 2.0$, and more preferably $0.8 \leq x \leq 1.5$.

The silicate phase may satisfy the following conditions (1) and/or (2).

(1) The silicate phase contains at least one selected from the group consisting of an alkali metal element and a Group 2 element (Group 2 element of the long form of the periodic table).

(2) The silicate phase contains an element L. The element L is at least one selected from the group consisting of B, Al, Zr, Nb, Ta, V, lanthanoid, Y, Ti, P, Bi, Zn, Sn, Pb, Sb, Co, Er, F, and W. Note that the lanthanoid is a generic term for 15 elements from lanthanum (La) with an atomic number 57 to lutetium (Lu) with an atomic number 71.

With regard to the condition (1), examples of the alkali metal element include lithium (Li), potassium (K), and sodium (Na). Examples of the Group 2 element include magnesium (Mg), calcium (Ca), strontium (Sr), and barium (Ba). By containing the alkali metal element and/or the Group 2 element, an irreversible capacity of the silicate phase may be reduced. The silicate phase (hereinafter, it may be referred to as a "lithium silicate phase") containing lithium is preferable, for example, from the viewpoint of having a small irreversible capacity and high initial charging and discharging efficiency.

The lithium silicate phase only needs to be an oxide phase containing Li, Si, and O, and may contain other elements. An atomic ratio of O to Si: O/Si in the lithium silicate phase is, for example, greater than 2 and less than 4. Preferably, O/Si is greater than 2 and less than 3. An atomic ratio of Li to Si: Li/Si in the lithium silicate phase is, for example, greater than 0 and less than 4.

The lithium silicate phase may include a lithium silicate phase represented by a formula: $Li_{2z}SiO_{(2+z)}$ ($0 < z < 2$), or may include the lithium silicate phase. z preferably satisfies a relationship of $0 < z < 1$, and is more preferably $z = 1/2$ (that is, $Li_2Si_2O_5$).

In addition, the Si-based material may include a composite particle containing an ion-conductive phase and a silicon phase dispersed in the ion-conductive phase, and a coating layer covering at least a part of a surface of the composite particle.

The coating layer present on the surface of the composite particle includes, for example, a conductive layer. By forming the conductive layer on the surface of the composite particle, the conductivity of the Si-based material can be improved. As the conductive material constituting the conductive layer, a conductive material containing carbon is preferable. Examples of the conductive material containing carbon include a conductive carbon material. Examples of the conductive carbon material include carbon black, graphite, and amorphous carbon having low crystallinity (amorphous carbon). The amorphous carbon is preferable in that it has a large buffering action on the silicon phase that changes in volume by charging and discharging. The amorphous carbon may be easily graphitizable carbon (soft carbon) or hardly graphitizable carbon (hard carbon). Examples of the carbon black include acetylene black and Ketjenblack. The thickness of the conductive layer may be, for example, in a range of greater than or equal to 1 nm and less than or equal to 200 nm. The thickness of the conductive layer can be measured by observing a cross section of the Si-containing material using SEM or TEM (transmission electron microscope).

The content of the Si-based material is preferably greater than or equal to 30% by mass based on the total mass of the negative electrode active material from the viewpoint of, for example, increasing the capacity of the secondary battery. In addition, from the viewpoint of achieving a high capacity of the secondary battery and suppressing swelling of the negative electrode, the content of the Si-based material is preferably greater than or equal to 30% by mass and less than or equal to 60% by mass, and more preferably greater than or equal to 35% by mass and less than or equal to 55% by mass based on the total mass of the negative electrode active material.

The average particle size of the Si-based material is preferably greater than or equal to 3 $\mu$m and less than or equal to 15 $\mu$m, more preferably greater than or equal to 4 $\mu$m and less than or equal to 12 $\mu$m, and still more preferably greater than or equal to 6 $\mu$m and less than or equal to 10 $\mu$m from the viewpoint of suppressing deterioration of charge-discharge cycle characteristics. The average particle size is a volume average particle size D50 at which the volume integrated value is 50% in a particle size distribution obtained by laser diffraction scattering.

The carbon material contained in the negative electrode active material may be a conventionally known carbon material used as the negative electrode active material for secondary batteries, and examples thereof include graphite materials such as natural graphite such as flake graphite, massive graphite, and earthy graphite, and artificial graphite such as massive artificial graphite (MAG) and graphitized mesophase carbon microbeads (MCMB).

The carbon material preferably contains a graphite material having a specific surface area less than or equal to 3 $m^2/g$. When the negative electrode mixture layer 42 contains the graphite material having the specific surface area less than or equal to 3 $m^2/g$, for example, pores corresponding to the peak R2 are easily formed in the negative electrode mixture layer 42, and the permeability of the electrolyte solution into the negative electrode mixture layer 42 is further improved. In addition, from the viewpoint of reactivity as an electrode, the specific surface area of the graphite material is preferably greater than or equal to 0.5 $m^2/g$. The specific surface area of the graphite material is more preferably greater than or equal to 0.5 $m^2/g$ and less than or equal to 2.0 $m^2/g$. The specific surface area of the graphite material is measured by the BET method using a conventionally known specific surface area measuring apparatus (for example, Macsorb (registered trademark) HM model-1201 manufactured by Mountech Co., Ltd.).

The average particle size of the graphite material is preferably greater than or equal to 5 μm and less than or equal to 30 μm, more preferably greater than or equal to 10 μm and less than or equal to 25 μm, and still more preferably greater than or equal to 12 μm and less than or equal to 20 μm, for example, from the viewpoint of suppressing the swelling of the negative electrode or the like. The average particle size is the volume average particle size D50 in the same manner as described above.

The content of the carbon material is, for example, preferably greater than or equal to 40% by mass and less than or equal to 70% by mass, more preferably greater than or equal to 45% by mass and less than or equal to 65% by mass based on the total mass of the negative electrode active material.

An example of a method for producing the negative electrode 12 will be described. The negative electrode 12 includes: a first step of applying a negative electrode slurry including a negative electrode active material containing a carbon material and a Si-based material, vaporization particles vaporized at a temperature greater than or equal to 100°C and less than or equal to 200°C, and a binder or the like added as necessary to the negative electrode current collector 40 to produce a coating film, and then rolling the coating film; and a second step of heat-treating the coating film at a temperature greater than or equal to 100°C and less than or equal to 200°C after the first step to form the negative electrode mixture layer 42.

When the coating film is heat-treated, the vaporization particles are vaporized, and the vaporization particles are separated from the inside of the coating film, so that not only small pores corresponding to the peaks R1 and R3 but also relatively large pores corresponding to the peak R2 are formed in the coating film. As the carbon material, it is preferable to use graphite particles having a specific surface area less than or equal to 3 $m^2/g$. Since the graphite particles having the specific surface area less than or equal to 3 $m^2/g$ are hard materials, for example, even when the coating film is rolled, the graphite particles are hardly crushed, and pores in the coating film are easily maintained. According to the above production method, it is easy to obtain the negative electrode mixture layer 42 having the above-described pore size distribution.

The heat treatment time only needs to be sufficient to vaporize the vaporization particles in the coating film, and may be, for example, greater than or equal to 5 hours.

The vaporization particles include at least one of a material that sublimates at a temperature greater than or equal to 100°C and less than or equal to 200°C, a material that decomposes at a temperature greater than or equal to 100°C and less than or equal to 200°C, and a material that dissolves and then evaporates at a temperature greater than or equal to 100°C and less than or equal to 200°C. Specific examples of the material include dicarboxylic acids such as fumaric acid, malonic acid, and malic acid, metal oxalates, camphor, and naphthalene. The volume average particle size of the vaporization particles is preferably, for example, greater than or equal to 2 μm and less than or equal to 10 μm from the viewpoint of easily forming relatively large pores corresponding to the peak R2.

Examples of the mixing of the raw materials such as the negative electrode active material and the vaporization particles in obtaining the negative electrode slurry include cutter mills, pin mills, bead mills, fine particle composing machines (devices in which shear force is generated between a specially shaped rotor rotating at a high speed inside a tank and a collision plate), granulators, and kneading machines such as twin-screw extruders and planetary mixers.

The negative electrode slurry is applied using, for example, a slit die coater, a reverse roll coater, a lip coater, a blade coater, a knife coater, a gravure coater, or a dip coater.

When the negative electrode slurry is applied to the negative electrode current collector 40 to obtain a coating film, the coating film is preferably heat-dried. A temperature of the heat-drying may be a temperature at which the vaporization particles are not vaporized or a temperature at which some of the vaporization particles are vaporized.

The rolling of the coating film may be performed several times at a predetermined linear pressure, for example, with a roll press machine until the coating film has a predetermined thickness.

The ratio $(V_{R2}/V_{R1})$ of the maximum value $V_{R2}$ of the peak R2 to the maximum value $V_{R1}$ of the peak R1 in the pore size distribution of the negative electrode mixture layer 42 and the ratio $(V_{R1}/V_{R3})$ of the maximum value $V_{R3}$ of the peak R3 to the maximum value $V_{R1}$ of the peak R1 can be controlled by adjusting, for example, the specific surface area of the graphite particles, the volume average particle size of the vaporization particles, the viscosity of the negative electrode slurry due to addition of a solvent or the like, the heat treatment time or the temperature, the linear pressure during rolling of the coating film, or the like.

In the first step, for example, a negative electrode slurry A containing a carbon material and vaporization particles and a negative electrode slurry B containing a carbon material and vaporization particles (not necessarily containing vaporization particles) having a lower concentration than the negative electrode slurry A may be prepared, and two-layer coating of the negative electrode slurries A and B may be performed on the negative electrode current collector 40. In the two-layer coating, the negative electrode slurry B is coated on the negative electrode current collector 40 to produce a coating film of the negative electrode slurry B, and then the negative electrode slurry A is coated on the coating film to produce a coating film of the negative electrode slurry A. In addition, it is preferable to use graphite particles having a specific surface area less than or equal to 3 $m^2$/g as at least the carbon material contained in the negative electrode slurry A between the carbon materials contained in the negative electrode slurries A and B. By such two-layer coating, for example, it is easy to make the abundance ratio of pores corresponding to the peak R2 in the upper half region 42b of the negative electrode mixture layer 42 greater than the abundance ratio of pores corresponding to the peak R2 in the lower half region 42a.

[Separator]

As the separator 13, for example, a porous sheet having ion permeability and insulating properties is used. Specific examples of the porous sheet include microporous thin films, woven fabrics, nonwoven fabrics, and the like. As a material of the separator 13, polyolefin such as polyethylene and polypropylene, and cellulose are suitable. The separator 13 may have either a single-layered structure or a multi-layered structure. On the surface of the separator, for example, a heat-resistant layer may be formed.

EXAMPLES

Hereinafter, the present disclosure will be further described with reference to Example. The present disclosure, however, is not limited to Example.

<Example>

[Production of Negative Electrode]

A graphite material having a specific surface area of 1.2 $m^2$/g and SiO were mixed at a mass ratio of 90 : 10. The mixture was used as a negative electrode active material. Then, the negative electrode active material, carboxymethyl cellulose (CMC), styrenebutadiene copolymer rubber (SBR), carbon nanotubes, and fumaric acid (average particle size: 6 $\mu$m) were mixed at a mass ratio of 100 : 1 : 1 : 1 : 12.5, and the mixture was mixed with given water to prepare a negative electrode slurry. The negative electrode slurry was applied to both surfaces of a negative electrode current collector made of a copper foil, and the coating film was dried and then rolled with a roller. Thereafter, the coating film was heat-treated at 200°C for 5 hours to produce a negative electrode in which a negative electrode mixture layer was formed on both surfaces of the negative electrode current collector.
In the obtained negative electrode, as a result of measuring a pore size distribution of the negative electrode mixture layer by mercury porosimetry, the peak R1 having a maximum value ($V_{R1}$:0.087 $cm^3$/g) at a pore size of 1.62 $\mu$m, the peak R2 having a maximum value ($V_{R2}$:0.069 $cm^3$/g) at a pore size of 45.2 $\mu$m, and the peak R3 having a maximum value ($V_{R3}$:0.084) at a pore size of 0.183 $\mu$m were observed. $V_{R2}/V_{R1}$ was 0.786, and $V_{R3}/V_{R1}$ was 0.961.

<Comparative Example 1>

A negative electrode was produced in the same manner as in Example except that fumaric acid was not used. In the negative electrode of Comparative Example 1, as a result of measuring a pore size distribution of a negative electrode mixture layer by mercury porosimetry, the peak R1 having a maximum value ($V_{R1}$:0.098 $cm^3$/g) at a pore size of 1.33 $\mu$m, the peak R2 having a maximum value ($V_{R2}$:0.047 $cm^3$/g) at a pore size of 60.3 $\mu$m, and the peak R3 having a maximum value ($V_{R3}$:0.094) at a pore size of 0.227 $\mu$m were observed. $V_{R2}/V_{R1}$ was 0.484, and $V_{R3}/V_{R1}$ was 0.959.

<Comparative Example 2>

A negative electrode was produced in the same manner as in Example except that fumaric acid was not used and a linear pressure at the time of rolling a coating film by a rolling roller was 10% lower than that in Example. In the negative electrode of Comparative Example 2, as a result of measuring a pore size distribution of a negative electrode mixture layer by mercury porosimetry, the peak R1 having a maximum value ($V_{R1}$:0.099 $cm^3$/g) at a pore size of 1.62 $\mu$m, the peak R2 having a maximum value ($V_{R2}$:0.034 $cm^3$/g) at a pore size of 90.5 $\mu$m, and the peak R3 having a maximum value ($V_{R3}$:0.130) at a pore size of 0.350 $\mu$m were observed. $V_{R2}/V_{R1}$ was 0.339, and $V_{R3}/V_{R1}$ was 1.305.

<Comparative Example 3>

A negative electrode was produced in the same manner as in Example except that fumaric acid was not used and a graphite material having a specific surface area of 0.9 $m^2$/g was used. In the negative electrode of Comparative Example 3, a pore size distribution of a negative electrode mixture layer was measured by mercury porosimetry, and as a result, the peak R1 having a maximum value ($V_{R1}$:0.171 cm$^3$/g) at a pore size of 1.17 $\mu$m, the peak R2 having a maximum value ($V_{R2}$:0.026 cm$^3$/g) at a pore size of 72.1 $\mu$m, and the peak R3 having a maximum value ($V_{R3}$:0.177) at a pore size of 0.406 $\mu$m were observed. $V_{R2}/V_{R1}$ was 0.154, and $V_{R3}/V_{R1}$ was 1.035.

<Comparative Example 4>

A negative electrode was produced in the same manner as in Example except that a graphite material having a specific surface area of 4.0 m$^2$/g was used. In the negative electrode of Comparative Example 4, a pore size distribution of a negative electrode mixture layer was measured by mercury porosimetry, and as a result, the peak R1 having a maximum value ($V_{R1}$:0.356 cm$^3$/g) at a pore size of 1.05 $\mu$m, the peak R2 having a maximum value ($V_{R2}$:0.043 cm$^3$/g) at a pore size of 47.9 $\mu$m, and the peak R3 having a maximum value ($V_{R3}$:0.065) at a pore size of 0.128 $\mu$m were observed. $V_{R2}/V_{R1}$ was 0.120, and $V_{R3}/V_{R1}$ was 0.182.

[Evaluation of Permeability of Electrolyte Solution]

In a mixed solvent obtained by mixing ethylene carbonate (EC) and ethyl methyl carbonate (EMC) at a mass ratio of 1 : 3, LiPF$_6$ was dissolved at a concentration of 1 mol/L to prepare an electrolyte solution. Onto the negative electrode mixture layer of the negative electrode of each of Example and Comparative Examples, 10 $\mu$L of the electrolyte solution was dropped, and time from when the electrolyte solution was dropped until the electrolyte solution was not confirmed on the surface of the negative electrode mixture layer was measured as a liquid absorption time. The results are shown in Table 1. Note that, in Table 1, the liquid absorption time of Comparative Example 1 is used as a reference (1.00), and the liquid absorption times of Example and Comparative Examples 2 to 4 are shown as relative values.

[Table 1]

| | Pore size distribution of negative electrode mixture layer | | | | | | | | Evaluation |
|---|---|---|---|---|---|---|---|---|---|
| | Peak R3 (greater than or equal to 0.1 $\mu$m and less than or equal to 0.6 $\mu$m) | | Peak R1 (greater than or equal to 1 $\mu$m and less than or equal to 3 $\mu$m) | | Peak R2 (greater than or equal to 30 $\mu$m and less than or equal to 100 $\mu$m) | | Maximum value ratio | | Liquid absorption time |
| | Pore size (m) with maximum value | Maximum value $V_{R3}$ (cm$^3$/g) | Pore size ($\mu$m) with maximum value | Maximum value $V_{R1}$ (cm$^3$/g) | Pore size ($\mu$m) with maximum value | Maximum value $V_{R2}$ (cm$^3$/g) | $V_{R3}/V_{R1}$ | $V_{R2}/V_{R1}$ | |
| Comparative Example 1 | 0.227 | 0.094 | 1.33 | 0.098 | 60.3 | 0.047 | 0.959 | 0.484 | 1.00 |
| Comparative Example 2 | 0.350 | 0.130 | 1.62 | 0.099 | 90.5 | 0.034 | 1.305 | 0.339 | 0.94 |
| Comparative Example 3 | 0.406 | 0.177 | 1.17 | 0.171 | 72.1 | 0.026 | 1.035 | 0.154 | 1.61 |
| Comparative Example 4 | 0.128 | 0.065 | 1.05 | 0.356 | 47.9 | 0.043 | 0.182 | 0.120 | 2.27 |
| Example | 0.183 | 0.084 | 1.62 | 0.087 | 45.2 | 0.069 | 0.961 | 0.786 | 0.76 |

As shown in Table 1, the liquid absorption time in Example was shorter than those in Comparative Examples 1 to 4. That is, it can be said that the negative electrode having good permeability of the electrolyte solution is obtained when, in the negative electrode mixture layer containing the carbon material and the Si-based material, the pore size distribution measured by the mercury porosimetry has the peak R1 having the maximum value $V_{R1}$ in a range in which the pore size is greater than or equal to 1 $\mu$m and less than or equal to 3 $\mu$m and the peak R2 having the maximum value $V_{R2}$ in a range in which the pore size is greater than or equal to 30 $\mu$m and less than or equal to 100 $\mu$m, and the ratio ($V_{R2}/V_{R1}$) of the maximum value $V_{R2}$ of the peak R2 to the maximum value $V_{R1}$ of the peak R1 is greater than or equal to 0.5.

[Supplementary Notes]

(1) A negative electrode for secondary batteries including a negative electrode current collector and a negative electrode mixture layer disposed on the negative electrode current collector, wherein

the negative electrode mixture layer includes a carbon material and a Si-based material, and
a pore size distribution of the negative electrode mixture layer as measured by mercury porosimetry has a peak R1 having a maximum value $V_{R1}$ in a range in which a pore size is greater than or equal to 1 $\mu$m and less than or equal to 3 $\mu$m and a peak R2 having a maximum value $V_{R2}$ in a range in which the pore size is greater than or equal to 30 $\mu$m and less than or equal to 100 $\mu$m, and a ratio ($V_{R2}/V_{R1}$) of the maximum value $V_{R2}$ of the peak R2 to the maximum value $V_{R1}$ of the peak R1 is greater than or equal to 0.5 and less than or equal to 100.

(2) The negative electrode for secondary batteries according to (1), wherein the ratio ($V_{R2}/V_{R1}$) of the maximum value $V_{R2}$ of the peak R2 to the maximum value $V_{R1}$ of the peak R1 is greater than or equal to 0.5 and less than or equal to 2.0.

(3) The negative electrode for secondary batteries according to (2), wherein the ratio ($V_{R2}/V_{R1}$) of the maximum value $V_{R2}$ of the peak R2 to the maximum value $V_{R1}$ of the peak R1 is greater than or equal to 0.5 and less than or equal to 1.0.

(4) The negative electrode for secondary batteries according to any one of (1) to (3), wherein the pore size distribution of the negative electrode mixture layer has a peak R3 having a maximum value $V_{R3}$ in a range in which the pore size is greater than or equal to 0.1 $\mu$m and less than or equal to 0.6 $\mu$m, and a ratio ($V_{R3}/V_{R1}$) of the maximum value $V_{R3}$ of the peak R3 to the maximum value $V_{R1}$ of the peak R1 is greater than or equal to 0.9 and less than or equal to 1.5.

(5) The negative electrode for secondary batteries according to any one of (1) to (4), wherein the Si-based material contains composite particles having an ion-conductive phase and a silicon phase dispersed in the ion-conductive phase.

(6) The negative electrode for secondary batteries according to any one of (1) to (5), wherein the carbon material contains a graphite material having a specific surface area less than or equal to 3 m$^2$/g.

(7) The negative electrode for secondary batteries according to (6), wherein the graphite material has an average particle size greater than or equal to 5 $\mu$m and less than or equal to 30 $\mu$m.

(8) The negative electrode for secondary batteries according to any one of (1) to (7), wherein the Si-based material has an average particle size greater than or equal to 3 $\mu$m and less than or equal to 15 $\mu$m.

(9) The negative electrode for secondary batteries according to any one of (1) to (8), wherein, when the negative electrode mixture layer is divided into two equal parts in a thickness direction to be divided into a lower half region on a side of the negative electrode current collector and an upper half region on a side of a surface, an abundance ratio of pores corresponding to the peak R2 in the upper half region is greater than an abundance ratio of pores corresponding to the peak R2 in the lower half region.

(10) A secondary battery including the negative electrode for secondary batteries according to any one of (1) to (9).

(11) A method for producing a negative electrode for secondary batteries, the method including:

a first step of applying a negative electrode slurry containing a graphite material having a specific surface area less than or equal to 3 m$^2$/g, a Si-based material, and vaporization particles, vaporized at a temperature greater than or equal to 100°C and less than or equal to 200°C, to a negative electrode current collector to produce a coating film, and then rolling the coating film; and
a second step of heat-treating the coating film at a temperature greater than or equal to 100°C and less than or equal to 200°C after the first step to form a negative electrode mixture layer.

(12) The method for producing a negative electrode for secondary batteries according to (11), wherein the vaporization particles contain at least one of a material that sublimates at a temperature greater than or equal to 100°C and less than or equal to 200°C, a material that decomposes at a temperature greater than or equal to 100°C and less than or equal to 200°C, and a material that evaporates at a temperature greater than or equal to 100°C and less than or equal to 200°C after dissolution.

REFERENCE SIGNS LIST

| | |
|---|---|
| 10 | Secondary battery |
| 11 | Positive electrode |
| 12 | Negative electrode |
| 13 | Separator |
| 14 | Electrode assembly |
| 15 | Battery case |
| 16 | Case body |
| 17 | Sealing assembly |
| 18 | Insulating plate |
| 18,19 | Insulating plate |
| 20 | Positive electrode lead |
| 21 | Negative electrode lead |
| 22 | Projecting portion |
| 23 | Filter |
| 24 | Lower valve member |
| 25 | Insulating member |
| 26 | Upper valve member |
| 27 | Cap |
| 28 | Gasket |
| 40 | Negative electrode current collector |
| 42 | Negative electrode mixture layer |
| 42a | Lower half region |
| 42b | Upper half region |

**Claims**

1. A negative electrode for secondary batteries comprising a negative electrode current collector and a negative electrode mixture layer disposed on the negative electrode current collector, wherein

   the negative electrode mixture layer includes a carbon material and a Si-based material, and
   a pore size distribution of the negative electrode mixture layer as measured by mercury porosimetry has a peak R1 having a maximum value $V_{R1}$ in a range in which a pore size is greater than or equal to 1 $\mu$m and less than or equal to 3 $\mu$m and a peak R2 having a maximum value $V_{R2}$ in a range in which the pore size is greater than or equal to 30 $\mu$m and less than or equal to 100 $\mu$m, and a ratio ($V_{R2}/V_{R1}$) of the maximum value $V_{R2}$ of the peak R2 to the maximum value $V_{R1}$ of the peak R1 is greater than or equal to 0.5 and less than or equal to 100.

2. The negative electrode for secondary batteries according to claim 1, wherein the ratio ($V_{R2}/V_{R1}$) of the maximum value $V_{R2}$ of the peak R2 to the maximum value $V_{R1}$ of the peak R1 is greater than or equal to 0.5 and less than or equal to 2.0.

3. The negative electrode for secondary batteries according to claim 2, wherein the ratio ($V_{R2}/V_{R1}$) of the maximum value $V_{R2}$ of the peak R2 to the maximum value $V_{R1}$ of the peak R1 is greater than or equal to 0.5 and less than or equal to 1.0.

4. The negative electrode for secondary batteries according to any one of claims 1 to 3, wherein the pore size distribution of the negative electrode mixture layer has a peak R3 having a maximum value $V_{R3}$ in a range in which the pore size is greater than or equal to 0.1 $\mu$m and less than or equal to 0.6 $\mu$m, and a ratio ($V_{R3}/V_{R1}$) of the maximum value $V_{R3}$ of the peak R3 to the maximum value $V_{R1}$ of the peak R1 is greater than or equal to 0.9 and less than or equal to 1.5.

5. The negative electrode for secondary batteries according to any one of claims 1 to 3, wherein the Si-based material contains composite particles having an ion-conductive phase and a silicon phase dispersed in the ion-conductive phase.

6. The negative electrode for secondary batteries according to any one of claims 1 to 3, wherein the carbon material contains a graphite material having a specific surface area less than or equal to 3 m$^2$/g.

7. The negative electrode for secondary batteries according to claim 6, wherein the graphite material has an average particle size greater than or equal to 5 $\mu$m and less than or equal to 30 $\mu$m.

8. The negative electrode for secondary batteries according to any one of claims 1 to 3, wherein the Si-based material has an average particle size greater than or equal to 3 $\mu$m and less than or equal to 15 $\mu$m.

9. The negative electrode for secondary batteries according to any one of claims 1 to 3, wherein, when the negative electrode mixture layer is divided into two equal parts in a thickness direction to be divided into a lower half region on a side of the negative electrode current collector and an upper half region on a side of a surface, an abundance ratio of pores corresponding to the peak R2 in the upper half region is greater than an abundance ratio of pores corresponding to the peak R2 in the lower half region.

10. A secondary battery comprising the negative electrode for secondary batteries according to any one of claims 1 to 3.

11. A method for producing a negative electrode for secondary batteries, the method comprising:

a first step of applying a negative electrode slurry containing a graphite material having a specific surface area less than or equal to 3 m$^2$/g, a Si-based material, and vaporization particles, vaporized at a temperature greater than or equal to 100°C and less than or equal to 200°C, to a negative electrode current collector to produce a coating film, and then rolling the coating film; and
a second step of heat-treating the coating film at a temperature greater than or equal to 100°C and less than or equal to 200°C after the first step to form a negative electrode mixture layer.

12. The method for producing a negative electrode for secondary batteries according to claim 11, wherein the vaporization particles contain at least one of a material that sublimates at a temperature greater than or equal to 100°C and less than or equal to 200°C, a material that decomposes at a temperature greater than or equal to 100°C and less than or equal to 200°C, and a material that evaporates at a temperature greater than or equal to 100°C and less than or equal to 200°C after dissolution.

# Figure 1

# Figure 2

## INTERNATIONAL SEARCH REPORT

| International application No. |
| --- |
| **PCT/JP2024/018556** |

### A. CLASSIFICATION OF SUBJECT MATTER

*H01M 4/13*(2010.01)i; *H01M 4/38*(2006.01)i; *H01M 4/48*(2010.01)i; *H01M 4/139*(2010.01)i; *H01M 4/587*(2010.01)i
FI: H01M4/13; H01M4/38 Z; H01M4/48; H01M4/587; H01M4/139

According to International Patent Classification (IPC) or to both national classification and IPC

### B. FIELDS SEARCHED

Minimum documentation searched (classification system followed by classification symbols)

H01M4/00-4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | WO 2022/230661 A1 (PANASONIC INTELLECTUAL PROPERTY MANAGEMENT CO., LTD.) 03 November 2022 (2022-11-03) paragraphs [0012], [0044]-[0051], [0054], [0055] | 11-12 |
| A | | 1-10 |
| Y | WO 2023/032558 A1 (PANASONIC HOLDINGS CORP.) 09 March 2023 (2023-03-09) paragraphs [0011], [0012], [0027], [0040], [0051] | 11-12 |

☐ Further documents are listed in the continuation of Box C. ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **09 July 2024** | **30 July 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/018556**

| Patent document cited in search report | | | Publication date (day/month/year) | Patent family member(s) | | | Publication date (day/month/year) |
|---|---|---|---|---|---|---|---|
| WO | 2022/230661 | A1 | 03 November 2022 | EP | 4333106 | A1 | |
| | | | | paragraphs [0012], [0044]-[0051], [0054], [0055] | | | |
| | | | | CN | 117178384 | A | |
| WO | 2023/032558 | A1 | 09 March 2023 | CN | 117882207 | A | |
| | | | | paragraphs [0020], [0021], [0038], [0056], [0078] | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013219059 A

- JP 2001210323 A